# EUROPÄISCHE PATENTSCHRIFT

(11) **EP 3 208 982 B1**
(45) Veröffentlichungstag und Bekanntmachung des Hinweises auf die Patenterteilung: **15.04.2020**
(21) Anmeldenummer: 17154647.6
(22) Anmeldetag: 03.02.2017
(51) Int. Cl.: H04L 12/935, H04L 12/931, H04L 12/24, H04B 5/00

(54) **ROUTER MIT SEPARATER SCHNITTSTELLE ZUR KONFIGURATION DES ROUTERS SOWIE VERFAHREN ZUR KONFIGURATION EINES ROUTERS**
ROUTER WITH SEPARATE INTERFACE FOR CONFIGURING THE ROUTER, AND METHOD FOR CONFIGURING A ROUTER
ROUTEUR COMPRENANT UNE INTERFACE SÉPARÉE DESTINÉE À LA CONFIGURATION DU ROUTEUR ET PROCÉDÉ DE CONFIGURATION D'UN ROUTEUR

(30) Priorität: 16.02.2016 DE 102016102721
(43) Veröffentlichungstag der Anmeldung: 23.08.2017
(73) Patentinhaber: Insys Microelectronics GmbH, 93049 Regensburg (DE)
(72) Erfinder: WAGNER, Eduard B., 93051 Regensburg (DE)
(74) Vertreter: Hannke, Christian

(56) Entgegenhaltungen:
- WO-A1-2015/162539
- Anonymous: "NFC for embedded applications", www.nxp.com, 1. August 2014 (2014-08-01), Seiten 1-20, XP055389641, Gefunden im Internet: URL:https://www.nxp.com/docs/en/brochure/7 5017587.pdf [gefunden am 2017-07-11]
- BAKER F ET AL: "Requirements for IP Version 4 Routers; rfc1812.txt", REQUIREMENTS FOR IP VERSION 4 ROUTERS; RFC1812.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 June 1995 (1995-06-01), XP015007599,

## Beschreibung

Die Erfindung betrifft einen Router mit einer Vielzahl von ersten Schnittstellen zur Übertragung von Datenpaketen zwischen dem Router und Netzwerken oder Netzwerkteilnehmern über Kabel und/oder kabellos. Weiterhin betrifft die Erfindung ein Verfahren zur Konfiguration eines Routers.

Als Router werden Geräte verstanden, die Datenpakete von einem in ein anderes oder mehrere andere Netzwerke übertragen können. Dabei ist nicht nur die Weiterreichung von Datenpaketen möglich, sondern auch deren Analyse und/oder Modifikation. Beispielsweise können Daten aus einem Netzwerk von einem ersten Netzwerk mit einem ersten Netzwerkprotokoll erkannt und modifiziert und anschließend in ein zweites mit dem Router verbundenes Netzwerk mit einem zweiten Netzwerkprotokoll eingespeist werden. Auch Router mit einer Sandbox-Funktionalität und/oder einer Diagnose-Funktionalität zu Monitoring-bzw. Diagnose-Funktionalität sollen unter den Begriff Router fallen. Die Begriffe Router und Routersystem werden hierin synonym verwendet. Alle Angaben, die nur in Bezug auf einen Router gemacht werden, sollen auch analog für ein Routersystem gelten und umgekehrt.

Router zur Verbindung mindestens zweier Datennetze oder Netzwerkteilnehmer miteinander sind aus dem Stand der Technik bekannt. Um eine Kommunikation des Routers mit den verbundenen Netzwerken bzw. Netzwerkteilnehmern zu ermöglichen, ist in der Regel eine Konfiguration des Routers notwendig. Üblicherweise erfolgt die Konfiguration über IP-basierte Schnittstellen (z.B. Ethernet) von dem Anwender bzw. einem Monteur/Installateur. Eine solche Konfiguration kann leitungsgebunden oder kabellos erfolgen. In beiden Fällen muss jedoch der Router an eine Versorgungsspannung angeschlossen und betriebsbereit sein. Neben diesem Nachteil besteht bei der Konfiguration über ein kabelgebundenes System der Nachteil, dass auch ein solches Kabel physikalisch mit dem Router und dem Konfigurationswerkzeug verbunden werden muss. Dies setzt ein Kabel mit den passenden Schnittstellen voraus, was insbesondere bei Vor-Ort-Installationen nicht zwingend gewährleistet sein muss. Darüber hinaus kann auch ein Kabel defekt sein, so dass auch hier zusätzliche Fehlerquellen bestehen. Auch bei drahtlosen Wegen zur Konfiguration bestehen erhebliche Nachteile. Soll beispielsweise die Konfiguration über WLAN erfolgen, setzt dies voraus, dass der Router entweder WLAN als "access point" zur Verfügung stellen muss oder sich der Router als "WLAN client" in einem vorhandenen Netzwerk befindet. In beiden Fällen muss die WLAN-Funktionalität jedoch bereits auf die jeweilige Netzkonfiguration vorkonfiguriert sein, was insbesondere die Erstkonfiguration erschwert.

Als Alternative zu diesen Konfigurationsmöglichkeiten ist auch die Konfiguration über austauschbare Speicherkarten/Speichermedien bekannt. Hier sind zwei verschiedene Möglichkeiten zu unterscheiden. Bei der ersten Möglichkeit werden die Konfigurationsdaten auf einem Speichermedium gespeichert und dieses dann in den Router eingeführt. Anschließend wird der Router in Betrieb genommen und Daten werden von dem Speichermedium in den Router kopiert. Als Alternative dazu könnte auf das Kopieren der Daten von dem Speichermedium in den Router verzichtet werden, wenn das Speichermedium dauerhaft in dem Router verbleibt. Dabei wird jedoch für jeden Router ein dediziertes Speichermedium benötigt. Beide Möglichkeiten setzen jedoch das Vorhandensein spezieller Schreib-/Lesegeräte voraus, um das passende Speichermedium mit den notwendigen (Konfigurations-) Daten zu beschreiben. Wird die Verbindung zwischen Speichermedium und Router über einen externen Einschub in das Routergehäuse realisiert, besteht die Gefahr, dass über diesen Zugang Unbefugten sehr einfach eine Möglichkeit zur Manipulation der Routerkonfigurationen gegeben sein kann. So wäre es über einen Austausch des Speichermediums schnell möglich, die Konfigurationsdaten zu manipulieren.

Wird andererseits ein Speichermedium fest im Inneren des Routers verbaut, besteht die Notwendigkeit, dass die Konfigurationsdaten bereits zum Produktionszeitpunkt bekannt sein müssen. Außerdem ist dabei nachteilig, dass nach dem Einbau des Speichermediums in den Router dessen korrekter Einbau nicht überprüft werden kann und der Router somit bei zeitlich und örtlich versetzter Inbetriebnahme eventuell nicht funktionstüchtig ist.
Unabhängig von dem Kanal, über den die Kommunikation mit dem Router zu dessen Konfiguration hergestellt wird, erfolgt dies in der Regel über ein Notebook oder einen PC, wobei üblicherweise browser-, ethernet- oder herstellereigene Tools genutzt werden. In diesem Fall müssen die zur Konfiguration verwendeten Geräte (Notebook, PC, o.ä.) auf das jeweils von dem Router an dessen Schnittstelle vorgegebene Netzwerk umgestellt werden (z.B. IP-Adresse, Netzwerkmaske, u.a.). In vielen Fällen ist dies durch die IT-Security-Policies einiger Firmen unterbunden. In diesen Fällen muss firmenseitig zur Konfiguration ein eigenes Gerät (Notebook, PC, o.ä.) für Konfigurationszwecke bereitgestellt werden. In jedem Fall geht eine solche Konfiguration aber mit einem hohen Zeitbedarf und einer hohen Fehleranfälligkeit einher, die insbesondere durch vor Ort notwendige temporäre Umstellungen von Zugangsverbindungen hervorgerufen wird.

Bei der Konfiguration eines Routers kann zwischen einer Erstkonfiguration und einer Umkonfiguration unterschieden werden. Insbesondere bei der Erstkonfiguration ist es wünschenswert, dass diese Konfiguration schnell und einfach durchzuführen ist. Um dies zu ermöglichen, sind Router mit einer Schnellinbetriebnahmefunktion verfügbar, jedoch erfordern auch diese einen Zugang über die klassischen Konfigurationsschnittstellen, was die oben beschriebenen Nachteile mit sich bringt. Bei der Umkonfiguration besteht die Problematik, dass sich der Router bereits in einem bestehenden Netzwerk befindet und für die Umkonfiguration ein geeignetes Gerät im Netzwerk bereits zur Verfügung stehen muss oder dieses zusätzlich in das Netzwerk eingebunden werden muss. Wie oben bereits beschrieben, ist dies insbesondere in Firmennetzwerken aufgrund der bestehenden IT-Securitiy-Policen/-Policies mit einem erhöhten Aufwand verbunden. In allen beschriebenen Fällen ist es notwendig, dass der Anwender, Erstinstallateur oder Monteur vor Ort ist und entsprechendes Fachwissen zur Konfiguration mitbringt. Dies bezieht sich sowohl auf die Bedienung des Routers als auch des notwendigen Konfigurationswerkzeugs. Wie oben beschrieben, bestehen vielfältige Fehlerquellen.

Aus dem Stand der Technik ist die Druckschrift WO 2015 / 162539 A1 bekannt. Die Druckschrift offenbart ein erstes System, welches zur Konfiguration eines zweiten Systems vorgesehen ist. Das erste System kann beispielsweise ein Router sein. Das zweite System kann beispielsweise als ein Smartphone (111a) ausgestaltet sein. Die Konfiguration des zweiten Systems durch das erste System kann dabei mittels SMS, eines USB-Modems oder mittels einer NFC-Verbindung erfolgen.

Die Druckschrift "NFC for embedded applications" WWW.nxp.com, 1. August 2014, Seiten 1-20 XP055389641 lehrt verschiede Steuerungen mittels der NFC Technik.

Ferner offenbart das Dokument Baker F. et al: "Requirements for IP Version 4 Routers; rfc1812.txt Voraussetzungen für IPv4 Router. Derartige Router weisen eine Vielzahl von Schnittstellen und einen sogenannten "Out-of-Band Access" auf, welcher einen Zugang auf das Routersystem mittels eines Frequenzbereichs außerhalb des Hauptfrequenzbandes erlaubt. Aufgabe der vorliegenden Erfindung ist es daher, einen Router bereitzustellen, der eine vereinfachte Erstkonfiguration ermöglicht und dabei auch die geforderte Sicherheit und die Vermeidung von Fehlern gewährleistet. Außerdem ist es Aufgabe der vorliegenden Erfindung, ein Verfahren zur Konfiguration eines Routers bereitzustellen. Die oben genannten Aufgaben beziehen sich sowohl auf eine Erstkonfiguration eines Routers als auch auf eine Umkonfiguration. Gelöst werden diese Aufgaben durch einen Router nach Anspruch 1. Ferner werden die Aufgaben durch ein Verfahren zur Konfiguration eines Routers nach Anspruch 7 und ein Verfahren zur Diagnose eines Routers nach Anspruch 10 gelöst.

Die Erfindung ist in den unabhängigen Ansprüchen definiert. Die abhängigen Ansprüche definieren weitere Ausführungsformen der Erfindung.

Erfindungsgemäß weist der Router eine Vielzahl von ersten Schnittstellen zur Übertragung von Datenpaketen zwischen dem Router und Netzwerken oder Netzwerkteilnehmern über Kabel und/oder kabellos auf, wobei der Router mindestens eine zweite Schnittstelle zum Empfang und/oder Senden von Daten von/an eine/r Gegenstelle über Kabel und/oder kabellos aufweist, wobei diese zweite Schnittstelle physikalisch von allen ersten Schnittstellen derart getrennt ist, dass keine direkte Datenübertragung zwischen der mindestens einen zweiten Schnittstelle und den ersten Schnittstellen möglich ist. Durch einen solchen Router wird ein Zugang über eine zweite Schnittstelle ermöglicht, die unabhängig von den Netzwerken, in die der Router über die ersten Schnittstellen eingebunden ist, genutzt werden kann. Über diese zweite Schnittstelle kann der Router mit einem Gerät verbunden werden, mittels dessen Konfigurationsdaten erzeugt, übertragen, ausgelesen und/oder editiert werden können. Somit ist es möglich, ein Konfigurationsgerät mit dem Router zu verbinden, ohne dass dieses in das Netzwerk eingebunden wird, in das der Router integriert ist. Es besteht somit keine Gefahr, dass Daten oder Netzwerkteilnehmer durch das Konfigurationsgerät beschädigt werden.

Weitere vorteilhafte Ausführungsformen ergeben sich aus den Unteransprüchen. Erfindungsgemäß ist die zweite Schnittstelle mit einem nichtflüchtigen Speicher in Kommunikationsverbindung, so dass über diese Schnittstelle Daten in den nichtflüchtigen Speicher geschrieben und/oder aus diesem ausgelesen werden können.

Erfindungsgemäß ist der mit der zweiten Schnittstelle in Kommunikationsverbindung stehende nichtflüchtige Speicher derart mit einer Steuereinrichtung des Routers verbunden ist, dass durch die Steuereinrichtung Daten, die vorzugsweise ausgewählt sind aus Konfigurationsdaten, Steuerdaten, Diagnosedaten und oder Kombinationen davon, aus dem nichtflüchtigen Speicher auslesbar oder auf diesem ablegbar sind. Somit kann auf diesen nichtflüchtigen Speicher auch eine Steuereinrichtung des Routers zugreifen, so dass die dort abgespeicherten Daten entweder direkt als Konfigurationsdaten verwendet werden können oder durch die Steuereinrichtung in Konfigurationsdaten umgewandelt werden können. Letzteres ist beispielswiese bei verschlüsselten Daten sinnvoll, so dass vermieden werden kann, dass die Konfigurationsdaten unverschlüsselt außerhalb des Netzes abgespeichert werden. Erfindungsgemäß erfolgt die Anbindung des nichtflüchtigen Speichers in das Routersystem bzw. an die Steuereinrichtung mittels einer weiteren, bevorzugt bidirektionalen, dritten Schnittstelle. Dadurch wird eine bidirektionale Kommunikation der Steuereinrichtung mit dem nichtflüchtigen Speicher ermöglicht. Somit ist z.B. nicht nur das Auslesen von Konfigurationsdaten aus dem nichtflüchtigen Speicher, sondern auch das Schreiben von Zustandsdaten (bzw. Diagnosedaten) in den nichtflüchtigen Speicher möglich.

Durch einen wie oben beschriebenen Router ist es möglich, diesen zu konfigurieren, ohne dass ein spezielles Speichermedium wie ein USB-Stick oder eine Speicherkarte mit den Konfigurationsdaten in diesen eingeführt werden muss. Vielmehr kann durch die zweite Schnittstelle ein Zugriff auf eine bereits in den Router integrierte Speichereinrichtung geschaffen werden. Der Zugang über die zweite Schnittstelle kann durch softwareseitige oder hardwareseitige Sperre vor unbefugtem Zugriff geschützt sein. Da das Speichermedium im Inneren des Routers angeordnet ist, ist ein einfacher Austausch dieses Speichermediums nicht möglich. Dadurch können einerseits eine einfache Konfiguration und eine große Sicherheit des gesamten Netzwerkes und einzelner Netzwerkteilnehmer gewährleistet sein.

In einer weiteren bevorzugten Ausführungsform ist mindestens eine zweite Schnittstelle eine Schnittstelle, über die drahtlos kommuniziert werden kann. Dies hat den Vorteil, dass keine Öffnung in dem Gehäuse des Routers vorhanden sein muss. Somit ist die Existenz der zweiten Schnittstelle nicht ohne weiteres erkennbar.

In einer weiteren erfindungsgemäßen Ausführungsform ist mindestens eine zweite Schnittstelle eine RFID- (radio-frequency identification-) Schnittstelle. Somit wird das berührungslose Identifizieren und Lokalisieren der Schnittstelle und somit auch des damit fest verbundenen Routers möglich.

Erfindungsgemäß ist die mindestens eine zweite Schnittstelle derart ausgebildet ist, dass eine Kommunikation über diese Schnittstelle auch dann möglich ist, wenn der Router nicht mit einem Stromnetz verkabelt ist, also wenn er sich in einem stromlosen Zustand befindet. Auch dies ist bei der Verwendung einer RFID-Schnittstelle als zweite Schnittstelle möglich. Die Stromversorgung kann über die RFID-Schnittstelle selbst erfolgen. Entsprechende RFID-Chips und - antennen sind aus dem Stand der Technik bekannt. Bevorzugt umfasst eine zweite Schnittstelle eine passive RFID-Komponente (z.B. ein sogenannter "Tag" oder ein "Transponder"). Weiter bevorzugt weist die RFID-Schnittstelle und/oder die passive RFID-Komponente eine, bevorzugt im Routergehäuse angeordnete RFID-Antenne auf. Eine solche RFID-Antenne kann sowohl als diskretes Bauteil (z.B. als Draht, Spule o.ä.) als auch als Leiterbahnstruktur auf einer Leiterplatte ausgeführt sein.

Durch die oben beschriebene erfindungsgemäße Ausführungsform, in der eine Kommunikation über eine zweite Schnittstelle auch dann möglich ist, wenn der Router nicht mit einem Stromnetz verkabelt ist, ergibt sich der besondere Vorteil, dass die Konfiguration des Routers auch erfolgen kann, wenn dieser sich noch in einer Verpackung befindet. Somit ist die Konfiguration auch einfach werkseitig möglich.

Eine RFID-Schnittstelle ist üblicherweise eindeutig identifizierbar, so dass ausgewählte Konfigurationsdaten bereits im Produktionsumfeld, während der Verpackung oder während des Versands entsprechend der Kundenerfordernisse konfiguriert werden kann. Die eindeutige Identifizierbarkeit, insbesondere zusammen mit der vergleichsweise kurzen Reichweite der Übertragung von Daten über RFID, ermöglicht die eindeutige Zuordnung und Übertragung von Konfigurationsdaten auf einen speziellen Router, auch wenn eine Vielzahl anderer Router in der Nähe ist.

Die oben beschriebenen Router und deren Varianten ermöglichen es, Router in großer Stückzahl zu produzieren und erst in einem anschließenden Prozess zu individualisieren, indem kundenspezifische Daten auf diesen aufgespielt werden. Da in Routern keine "backdoors" oder undokumentierten Schnittstellen vorhanden sein dürfen, ist es über eine solche zweite Schnittstelle sowohl für den Routerhersteller als auch für den Kunden jederzeit möglich, Konfigurationen auf den Router aufzuspielen oder diese zu verändern. Darüber hinaus ist es über diese Schnittstelle auch möglich, eine Diagnose über die Funktion des Routers im Betrieb auszulesen. Auch dies kann aufgrund der Trennung der ersten und zweiten Schnittstellen erfolgen, ohne dass ein zusätzliches Gerät in das über die ersten Schnittstellen des Routers aufgebaute Netzwerk eingebunden werden muss.

Darüber hinaus erlaubt die Variante, in der die zweite Schnittstelle eine RFID-Schnittstelle ist, auch die Möglichkeit, eine Diagnose des Routers, dessen Funktion und/oder des Netzwerkes auch dann auszulesen, wenn der Router ausgeschaltet oder nicht mit dem Stromnetz verbunden ist. Somit wäre beispielsweise bei einer Rücksendung des Routers an den Hersteller eine Diagnose bereits möglich, auch wenn sich der Router noch in der Versandverpackung befindet. Eventuell wäre sogar eine Behebung der Fehler durch Anpassung der Konfiguration auf geänderte Umgebungsbedingungen möglich, ohne den Router aus der Versandverpackung zu entnehmen.

In einer erfindungsgemäßen Ausführungsform ist eine bidirektionale Kommunikation zwischen der Gegenstelle und dem Router über eine zweite Schnittstelle möglich. Somit können nicht nur Daten in den Router geschrieben werden, sondern auch Daten aus dem Router ausgelesen werden. Bevorzugt handelt es sich bei der Gegenstelle um ein externes Gerät, welches eine Lese-/Schreibeinrichtung aufweist, welche eine bidirektionale Kommunikation über die zweite Schnittstelle erlaubt.

Es kann somit auf den nichtflüchtigen Speicher (welcher ein Schreib-/Lesespeicher ist) sowohl über die zweite Schnittstelle (z.B. über eine RFID-Schnittstelle) und über die dritte Schnittstelle (intern zum Routersystem bzw. zur Steuereinrichtung) schreibend und/oder lesend zugegriffen werden. Auf die Speichereinrichtung können somit Daten auch im stromlosen Zustand des Routers von außen über die zweite Schnittelle (z.B. eine RFID Lese-/Schreibeinrichtung) geschrieben werden. Außerdem bleiben Informationen, die im Betriebszustand des Routersystems auf die Speichereinrichtung geschrieben wurden (sowohl vom Routersystem bzw. der Steuereinrichtung, als auch von außen, z.B. über ein RFID Lese-/Schreibgerät), auch im stromlosen Zustand erhalten und können von außen (z.B. über ein RFID Lese-/Schreibgerät) ausgelesen werden.

In einer weiteren, bevorzugten Ausführungsform ist das Schreiben und/oder Lesen auf die/aus der Speichereinrichtung über die zweite Schnittstelle (z.B. die RFID-Schnittstelle) und die (routerinterne) dritte Schnittstelle getrennt aktivierbar oder deaktivierbar. Bevorzugt ist, dass der Router eine Zugriffssteuereinrichtung aufweist, mittels der ein Zugriff auf den nichtflüchtigen Speicher über die RFID-Schnittstelle und/oder durch die Steuereinrichtung des Routers unabhängig voneinander aktivierbar oder deaktivierbar ist.

Bevorzugt ist weiterhin, dass der Router eine Kontrolleinrichtung aufweist, mittels der eine Berechtigung zur Kommunikation über die eine zweite Schnittstelle und/oder Lese- und/oder Schreibrechte auf einem nichtflüchtigen Speicher überprüfbar ist/sind. Somit können Manipulationen durch unbefugten Zugriff auf die Konfigurationsdaten vermieden oder zumindest erschwert werden.

Weiter bevorzugt ist, dass der Router eine Kommunikations- und Auswerteeinrichtung aufweist, mittels der der Router über die zweite Schnittstelle kommuniziert. Durch diese Kommunikations-und Auswerteeinrichtung können die empfangenen Daten ausgewertet und weiterleitet werden. Die Konfigurations- und Auswerteeinrichtung könnte auch eine Verschlüsselung der Daten durchführen, bevor diese an die zweite Schnittstelle oder den nichtflüchtigen Speicher übergeben werden. Sie könnte auch Daten entschlüsseln, wenn diese von der zweiten Schnittstelle oder dem nichtflüchtigen Speicher übergeben werden.

Die Konfigurations- und Auswerteeinrichtung kann in einer bevorzugten Ausführungsform auch zur Überprüfung der Authentizität und Integrität der von der zweiten Schnittstelle von außen empfangenen Daten eingerichtet sein.
Bevorzugt leitet die Kommunikations- und Auswerteeinrichtung die von der Speichereinrichtung oder der zweiten Schnittstelle erhaltenen Daten bzw. Informationen an andere Komponenten des Routers bzw. Routersystems weiter, z.B. an eine Konfigurationseinrichtung oder eine Steuereinrichtung.

Weiterhin ist bevorzugt, dass von der Kommunikations- und Auswerteeinrichtung auch Antworten an die zweite Schnittstelle zurückgegeben werden können. Dabei kann es sich beispielsweise um angeforderte Informationen oder um eine Rückmeldung über den Erfolg der Kommunikation (z.B. des Schreibens auf den nichtflüchtigen Speicher) handeln. Außerdem könnte eine Rückmeldung über Erfolg/Nichterfolg einer Authentifizierung, eine Quittierung von erfolgreich durchgeführten Aktionen oder die Information, dass bestimmte Aktionen (z.B. Kommandos) nicht zulässig sind, gegeben werden.

Bevorzugt weist der Router eine weitere Speichereinrichtung auf, auf der für die Überprüfung der Authentizität der von der RFID-Einrichtung von außen empfangenen Daten notwendige Metadaten wie z.B. Passwörter, Schlüssel oder Zertifikate gespeichert sind. Eine solche weitere Speichereinrichtung könnte direkt in der Konfigurationseinrichtung angeordnet sein oder in einem zusätzlichen, evtl. besonders sicheren Speicher, innerhalb des Routers bzw. Routersystems.

Weiter bevorzugt ist, dass die Kommunikations- und Auswerteeinrichtung auch eine Signalisierungsfunktion umfasst, mittels der dem Routersystem bzw. der Steuereinrichtung des Routers mitgeteilt werden kann, dass von außen neue Daten auf der Speichereinrichtung abgelegt wurden. Diese Signalisierung könnte aktiv durch die zweite Schnittstelle initiiert werden, beispielsweise durch einen digitalen Ausgang oder durch eine Nachricht an die Kommunikations- und Auswerteeinrichtung. Alternativ könnte die Signalisierung auch passiv erfolgen, indem die Kommunikations- und Auswerteeinrichtung eine entsprechende Signalquelle der zweiten Schnittstelle abfragt (beispielsweise durch eine Nachricht an die zweite Schnittstelle).

In einer bevorzugten Ausführungsform weist der Router, bevorzugt im Gehäuseinneren, eine Konfigurationseinrichtung auf, welche das Erstellen, Speichern und/oder Verwalten von Routerkonfigurationen ermöglicht.

Als RFID-Schnittstelle werden im Sinne dieser Erfindung alle drahtlosen Nahbereichsschnittstellen verstanden. Somit soll auch eine NFC (near field communication)- Schnittstelle als RFID-Schnittstelle im Sinne dieser Erfindung verstanden werden.

Als stromloser Zustand des Routers im Sinne dieser Erfindung wird ein Zustand verstanden, in dem der Router außer Betrieb ist und weder durch eine externe Spannungsversorgung, noch durch Batterien oder Akkumulatoren mit Spannung versorgt wird.

Als Betriebszustand des Routers soll verstanden werden, dass der Router in Betrieb ist oder in einem betriebsbereiten Zustand ist und entweder durch eine externe Spannungsversorgung und/oder durch Batterien oder Akkumulatoren mit Spannung versorgt wird.

Als Konfiguration werden sämtliche Parameter eines Routers verstanden, die vom Hersteller, Anwender oder auch Monteur einstellbar oder änderbar sind. Die Konfiguration oder eine Konfigurationsänderung kann nur für einzelne Parameter/Werte oder für alle Parameter/Werte erfolgen.

Als Steuerung im Sinne dieser Erfindung werden sämtliche Aktionen verstanden, die auf einen Router angewendet werden, um Funktionen durchzuführen, die die Konfiguration nicht zwangsläufig ändern, beispielsweise sind dies Software-Update durchführen, Neustart durchführen, aber auch das Zurücksetzen auf Werkseinstellungen.

Unter Diagnose werden Aktionen verstanden, die vom Router Informationen über dessen Betriebszustand oder grundlegende Geräteinformationen einholen (z.B. auslesen). Bei den eingeholten Geräteinformationen kann es sich beispielsweise um den Zustand der IP-Verbindungen, Geräteidentifikation (z.B. Seriennummer) und Gerätezusammensetzung (z.B. im Gerät verbaute Hardware, Ausstattungsmerkmale) und andere handeln.

Als das Geräteinnere bzw. das Innere eines Routers wird bei Geräten mit Gehäuse der Raum im Inneren des Gehäuses verstanden. Bei Routern ohne Gehäuse ist als das Geräteinnere das Vorhandensein eines bestimmten Bauteils auf einer Baugruppe (z.B. Platine) des Routers zu verstehen oder dass das entsprechende Bauteil mittels einer zusätzlichen Baugruppe (z.B. Platine) bestimmungsgemäß mit der Baugruppe (z.B. Platine) des Routers verbunden ist.

Als Gegenstelle wird ein externes Gerät verstanden, welches aktiv eine Kommunikation über die zweite Schnittstelle initiieren kann, um dadurch einen Lese- oder Schreibprozess in/aus dem nichtflüchtigen Speicher auszulösen. Da es sich bei der zweiten Schnittstelle bevorzugt um eine passive Schnittstelle handelt, die auch im stromlosen Zustand des Routers sowohl die Kommunikation mit der Gegenstelle als auch die Lese- und/oder Schreibprozesse auf/von dem nichtflüchtigen Speicher ermöglicht, ist besonders bevorzugt, dass die Gegenstelle die dazu notwendige Energie bereitstellen kann.

Weiterhin betrifft die Erfindung ein Verfahren zur Konfiguration eines Routers mit einer Vielzahl von ersten Schnittstellen zur Übertragung von Datenpaketen zwischen dem Router und Netzwerken oder Netzwerkteilnehmern über Kabel und/oder kabellos, wobei Konfigurationsdaten von einer Gegenstelle gesendet und über mindestens eine zweite Schnittstelle übertragen und anschließend auf einem nichtflüchtigen Speicher des Routers abgelegt werden. Eine zweite Schnittstelle kann dabei eine kabelgebundene und/oder kabellose Schnittstelle sein. Diese zweite Schnittstelle ist physisch von allen ersten Schnittstellen derart getrennt, dass keine direkte Datenübertragung zwischen der mindestens einen zweiten Schnittstelle und den ersten Schnittstellen möglich ist. Insbesondere handelt es sich bei einem solchen Verfahren um ein Verfahren zur Konfiguration eines wie weiter oben beschriebenen Routers.

Das Verfahren ist weiterhin dadurch gekennzeichnet, dass die Konfigurationsdaten kontaktlos per RFID übertragen werden.

Das Verfahren zeichnet sich weiterhin dadurch aus, dass sich der Router während der Übertragung von Daten über mindestens eine zweite Schnittstelle in einem stromlosen Zustand befindet.

Weiterhin betrifft die Erfindung ein Verfahren zur Diagnose eines Routers mit einer Vielzahl von ersten Schnittstellen zur Übertragung von Datenpaketen zwischen dem Router und Netzwerken oder Netzwerkteilnehmern über Kabel und/oder kabellos, wobei Diagnosedaten von einer Gegenstelle über mindestens eine zweite Schnittstelle von einem nichtflüchtigen Speicher des Routers gelesen werden. Eine zweite Schnittstelle kann dabei eine kabelgebundene und/oder kabellose Schnittstelle sein. Diese zweite Schnittstelle ist physisch von allen ersten Schnittstellen derart getrennt, dass keine direkte Datenübertragung zwischen der mindestens einen zweiten Schnittstelle und den ersten Schnittstellen möglich ist. Insbesondere handelt es sich bei einem solchen Verfahren um ein Verfahren zur Diagnose eines wie weiter oben beschriebenen Routers.

Das Verfahren zeichnet sich weiterhin dadurch aus, dass die Konfigurationsdaten kontaktlos, bevorzugt per RFID übertragen werden und/oder sich der Router während der Übertragung von Daten über mindestens eine zweite Schnittstelle in einem stromlosen Zustand befindet.

Für den Austausch der Daten zwischen dem Router bzw. Routersystem und einer externen Applikation (insbesondere zwischen Kommunikations- und Auswerteeinrichtung und externer Applikation über eine zweite Schnittstelle (z.B. RFID-Schnittstelle) und einem externen Lese-/Schreibgerät (z.B. einem RFID-Lese-/Schreibgerät)) ist die Vereinbarung eines Datenformates für die Nachrichten der im nichtflüchtigen Speicher abgelegten (bzw. abzulegenden) Daten notwendig. Diese Vereinbarung ist insbesondere auch im Hinblick darauf notwendig, dass ein Beschreiben des Zwischenspeichers auch im stromlosen Zustand passieren kann. Bevorzugt umfasst ein Datenformat für Nachrichten zum Austausch von Daten zwischen dem Router und einer externen Applikation daher folgende Informationen in Form eines Datensatzes in folgenden Datenfeldern:
- Ursache des letzten Schreibzugriffs auf den nichtflüchtigen Speicher, z.B.:
   ∘ (interner) Zugriff durch Router,
   ∘ Zugriff von außen durch externe Applikation,
   ∘ noch kein Zugriff, Werkseinstellung;
- Versionskennung des Datenformats;
- eindeutige Gerätekennung;
- Authentifizierung der externen Applikation;
- Kommando an Router;
- Antwort von Router und
- Integritätsmerkmal.

Die Ursache des letzten Schreibzugriffs auf den nichtflüchtigen Speicher kann beispielsweise durch Konstanten mit zugeordneter Bedeutung definiert sein.

Die Information, dass der letzte Zugriff von außen durch eine externe Applikation erfolgt ist, ist für die Kommunikations- und Auswerteeinheit im Router insbesondere dann wichtig, wenn der Zugriff im stromlosen Zustand erfolgt ist. Somit kann routerseitig erkannt werden, dass nach (erstmaliger) Rückkehr in den Betriebszustand (neue) Informationen über die zweite Schnittstelle empfangen wurden. Andererseits ist es für eine externe Applikation, insbesondere bei der Diagnose von Routerzuständen, wichtig zu wissen, dass, z.B. bei bidirektionaler Kommunikation, (neue) Daten aus dem Routersystem auf dem nichtflüchtigen Speicher vorliegen. Darüber hinaus kann es für die externe Applikation ebenso wichtig sein, zu wissen, dass es sich bei einem Router um ein fabrikneues Gerät bzw. generell ein Gerät mit Werkseinstellungen handelt, um hier ggf. andere Parameter zu übergeben oder Aktionen auszulesen.

Die Versionskennung des Datenformats ist insbesondere wichtig, um bei einem geänderten Aufbau des Datenformats der Nachrichten Abwärtskompatibilität sicherzustellen und das zutreffende Datenformat eindeutig identifizierbar zu machen. Beispielsweise kann es sich bei der Versionskennung des Datenformats um einen Wert handeln, der mit jeder neuen Version um den Wert 1 inkrementiert wird.

Die eindeutige Gerätekennung ist nützlich, um für die externe Applikation eine Unterscheidung von verschiedenen angesprochenen Geräten zu ermöglichen. Darüber hinaus ist damit auch die Identifikation von speziellen Gerätetypen möglich. Die eindeutige Gerätekennung kann beispielsweise die Seriennummer eines Gerätes sein. Bevorzugt ist die Gerätekennung ab Werk unveränderbar festgelegt und aufgebracht.

Ein Datenfeld zur Authentifizierung der externen Applikation enthält bevorzugt die von der externen Applikation zu übermittelnden Authentifikationsdaten, die z.B. durch die Kommunikations- und Auswerteeinheit im Router auf Korrektheit überprüft werden. Beispielsweise könnte dieses Datenfeld Benutzername und/oder Passwort enthalten. Alternativ oder zusätzlich könnten auch zertifikatsbasierte Methoden zur Authentifizierung verwendet werden. In diesem Datenfeld könnten auch Informationen darüber enthalten sein, welche Authentifizierungsmethode genutzt werden soll. Alternativ könnten diese Informationen auch über die Konfiguration des Routers festgelegt werden.

Von besonderer Bedeutung ist das Datenfeld, das das Kommando an den Router enthält. Dieses Datenfeld enthält die Information der externen Applikation an den Router, welche Aktion ausgeführt werden soll. Beispielsweise sind dies:
∘ Kommandos zum Bearbeiten der Konfiguration des Routers
∘ Kommandos zur Abfrage von Diagnoseinformationen
∘ Kommandos zum Steuern des Routers
Darüber hinaus können in diesem Datenfeld auch weiterführende zu übergebene Informationen enthalten sein.

Das Datenfeld "Antwort von Router" enthält Antworten des Routers auf Kommandos von der externen Applikation. Beispielsweise können dies sein:
∘ Kommando erfolgreich ausgeführt
∘ Kommando nicht erfolgreich ausgeführt
∘ Authentifizierung fehlerhaft
∘ Integritätsprüfung fehlgeschlagen
Darüber hinaus können in diesem Datenfeld auch weiterführende zu übergebene Informationen enthalten sein.

Das Datenfeld "Integritätsmerkmal" dient bevorzugt sowohl für die Kommunikations- und Auswerteeinheit des Routers als auch für die externe Applikation zur Überprüfung, ob der Datensatz fehlerfrei empfangen wurde. Beispielsweise kann dies in Form einer Prüfsumme oder eines Hash-Wertes über die in den vorgehenden Datenfeldern enthaltenen Daten erfolgen.

Eine eventuell vorgesehene Verschlüsselung kann über alle Datenfelder des Datensatzes erfolgen oder auch nur über ausgewählte Datenfelder, wie z.B. "Kommando an Routersystem" und "Antwort von Routersystem". Bevorzugt findet die Verschlüsselung über zeitgemäße, dem Schutzumfang der Daten angemessene Methoden statt. Die gewählte Verschlüsselungsmethode kann auch mit geänderten Sicherheitsanforderungen entsprechend angepasst werden. Evtl. kann dazu ein Update/Upgrade der Firmware des Routers erfolgen. Alternativ könne die Festlegung, über welche Teile des Datensatzes und mit welcher Art von Verschlüsselung eine Verschlüsselung des Datensatzes stattfindet, über die Konfiguration des Routers festgelegt werden.

Bevorzugt ist der nichtflüchtige Speicher bei einem fabrikneuen Gerät oder einem Gerät in Werksvoreinstellungen mit einem wie oben beschrieben aufgebauten Datensatz mit plausiblen Werten vorbelegt, die beispielsweise eine eindeutige Geräteidentifikation ermöglichen. Zusätzlich ist bevorzugt, dass der Zwischenspeicher vom Routersystem nach jedem abgeschlossenen Kommunikationsvorgang wieder auf plausible Werte initialisiert wird, beispielsweise mit dem Bereitstellen einer Antwort an die externe Applikation oder über eine Neu-Initialisierung.

Um die Kommunikation mit dem Router über eine zweite Schnittstelle zu ermöglichen, ist eine entsprechende Gegenstelle notwendig. Ein wesentlicher Aspekt der vorliegenden Erfindung ist daher ein Kommunikationssystem, welches neben einem wie oben beschriebenen Router auch eine Gegenstelle umfasst, welche eine Kommunikationseinrichtung zur Kommunikation zwischen Router und Gegenstelle über die zweite Schnittstelle aufweist. Bevorzugt handelt es sich bei der Gegenstelle um eine Lese-/Schreibeinrichtung, welche eine bidirektionale Kommunikation über die zweite Schnittstelle erlaubt. Insbesondere handelt es sich bei der Gegenstelle um ein RFID-Lese-/Schreibeinrichtung, mittels der Konfigurationsdaten über die zweite Schnittelle an den Router übertragbar sind. Handelt es sich bei der Gegenstelle um ein RFID-Lese-/Schreibgerät, muss dieses kompatibel zu dem im Router implementierten RFID-Standard sein.

Die Konfigurationsdaten sind bevorzugt mittels einer "externen Applikation" bearbeitbar. Bevorzugt sind die Konfigurationsdaten direkt in der Gegenstelle bearbeitbar. Bevorzugt weist die Gegenstelle dazu eine Eingabe und eine Anzeigeeinrichtung auf. Alternativ kann die "externe Applikation" jedoch auch ein separates Gerät sein oder darauf ausgeführt werden. In diesem Fall sind externe Applikation und Gegenstelle auf verschiedenen Geräten verteilt. Diese können beispielsweise über standardisierte Schnittstellen, z.B. TCP/IP, miteinander verbunden sein.

Denkbar sind auch Ausführungen, bei denen auf der Gegenstelle nur ein Teil der externen Applikation sitzt, und der andere Teil bzw. die anderen Teile der Applikation an anderen Orten bzw. Geräten lokalisiert sind und ggf. über standardisierte Schnittstellen an die Gegenstelle angebunden sind. Beispielsweise könnte dies durch einen über Internet verbundenen Server mit zentraler Gerätedatenbank realisiert sein.

Zur Steuerung der Kommunikation mit dem Router kann die Gegenstelle auch über eine Benutzerschnittstelle verfügen. Informationen über die aktuelle Kommunikation könnten beispielsweise auf einem Bildschirm, Display, o.ä. angezeigt werden. Befehle beispielsweise ausgewählt aus Start oder Abbruch der Kommunikation, Veränderung der Sendeleistung, Grad der Verschlüsselung u.a. könnten mittels Eingabetasten gegeben werden. Alternativ ist auch ein automatisierter Ablauf ohne Benutzerführung denkbar.

Vorteile und Zweckmäßigkeiten sind der nachfolgenden Beschreibung in Verbindung mit der Zeichnung zu entnehmen. Die Figuren müssen nicht alle in den übrigen Figuren gezeigten Ablaufdetails zeigen, bevorzugt gelten diese jedoch sinngemäß auch in den übrigen dargestellten Figuren. Hierbei zeigen:
- Fig. 1: einen bevorzugten Ablauf einer Konfiguration, wenn sich der Router im Zustand "stromlos" befindet,
- Fig. 2: einen bevorzugten Ablauf, wenn ein Router über ein Verfahren wie in Fig. 1 gezeigt aus dem stromlosen Zustand startet und den Empfang von Nachrichten zur Konfiguration, Steuerung oder Diagnose über RFID prüft,
- Fig. 3: einen bevorzugten Ablauf, wenn ein Router im Zustand Betrieb von einer externen Applikation über RFID Nachrichten zur Konfiguration, Steuerung oder Diagnose erhält,
- Fig. 4: einen bevorzugten Ablauf, bei dem die Auswertemöglichkeiten über die RFID-Schnittstelle nach Setzen auf Werkseinstellungen wiederhergestellt werden,
- Fig. 5: einen bevorzugten Ablauf, bei dem durch Konfigurationsänderungen sowohl die komplette RFID-Schnittstelle aktiviert/deaktiviert werden kann, als auch nur die Auswertung von Nachrichten über die RFID-Schnittstelle aktiviert/deaktiviert werden kann,
- Fig. 6: einen bevorzugten Ablauf, bei der die für RFID benutzten Authentifizierungs- und Verschlüsselungsmethoden geändert werden,
- Fig. 7: beispielhaft die vorteilhafte Anwendung der Konfiguration per RFID-Schnittstelle zur individuellen Erstkonfiguration ab Werk durch den Hersteller und
- Fig. 8: beispielhaft die vorteilhafte Anwendung der Konfiguration per RFID-Schnittstelle zur einfachen Erstkonfiguration durch den Kunden/Anwender.

Die im Folgenden dargestellten Abläufe bzw. Verfahren zeigen bevorzugte Ausführungsformen der Erfindung. Dabei wird die Anwendbarkeit der jeweiligen Ausführungsformen in verschiedenen Konstellationen am Beispiel der Kommunikation über eine RFID-Schnittstelle als zweite Schnittstelle dargestellt. Zur besseren Übersichtlichkeit der Darstellungen beschränken sich diese auf die Elemente externe Applikation, RFID Lese-/Schreibgerät, RFID-Schnittstelle (RFID-Einrichtung im Router (-System), restlicher Router (bzw. restliches Routersystem). Da die Kommunikationsabläufe auf der RFID-Protokollebene standardisiert sind, sind diese nicht gezeigt. Vielmehr werden die Abläufe auf Applikationsebene dargestellt. Nachrichten/Abfragen in den in den Figuren dargestellten Diagrammen/Ablaufbildern sind bevorzugt entsprechend dem oben beschriebenen Datenformat aufgebaut.

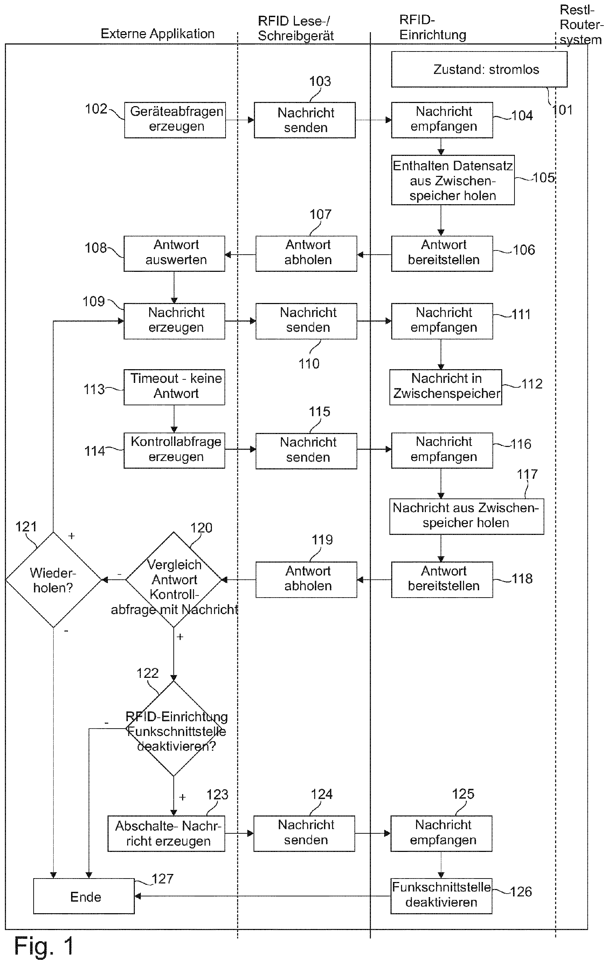

Fig. 1 zeigt den erfindungsgemäßen Ablauf einer Konfiguration, wenn sich der Router im Zustand "stromlos" 101 befindet. Die externe Applikation erstellt zunächst eine Geräteabfrage 102, die vom RFID Lese-/Schreibgerät an die zweite Schnittstelle im Routersystem, im Folgenden als RFID-Einrichtung bezeichnet, übergeben wird 103. Bevorzugt kann es sich dabei um die Abfrage des z.B. ab Werk vorhandenen Default-Datensatzes im nichtflüchtigen Speicher (im Folgenden auch als Zwischenspeicher bezeichnet) der RFID-Einrichtung handeln. Die Abfrage wird in Schritt 104 von der RFID-Einrichtung empfangen; diese holt den im Zwischenspeicher enthaltenen Datensatz 105 und stellt ihn in Schritt 106 an der RFID-Funk-Schnittstelle bereit, damit er in Schritt 107 vom RFID Lese-/Schreibgerät abgeholt werden kann.

Anschließend erfolgt eine Auswertung des im Routersystem schon vorhandenen Datensatzes durch die externe Applikation 108. Je nach Auswerteergebnis wird nun in Schritt 109 die eigentliche Nachricht erzeugt. Dabei kann es sich um Konfigurations-, Steuer- oder Diagnosekommandos handeln. Die Information, welche Konfigurations-, Steuer- oder Diagnosedaten an das Routersystem übergeben oder angefordert werden sollen, erhält die externe Applikation beispielsweise von einer Benutzerschnittstelle durch den Anwender oder durch einen Automatismus. Bevorzugt kann als Reaktion auf die Geräteabfrage auch auf Gerätespezifika eingegangen werden, wie beispielsweise individuelle Daten anhand der individuellen Gerätekennung oder aber generische Daten für einen bestimmen Gerätetyp (z.B. Unterscheidung Routersystem mit Mobilfunkanschluss / ohne Mobilfunkanschluss).

In Schritt 110 sendet das externe RFID Lese-/Schreibgerät die Nachricht über die RFID-Schnittstelle an die RFID-Einrichtung im Routersystem, welche sie in Schritt 111 empfängt und anschließend in Schritt 112 im Zwischenspeicher ablegt.

Da das Routersystem sich im stromlosen Zustand befindet, kann es die von der RFID-Einrichtung empfangene Nachricht nicht auswerten und entsprechend keine Antwort an die externe Applikation erstellen, weshalb die externe Applikation in Schritt 113 in einen Timeout läuft, was in dieser Konstellation auf ein Routersystem im stromlosen Zustand hinweist.

Um die Korrektheit der übermittelten Daten zu überprüfen, veranlasst die externe Applikation daraufhin in Schritt 114 eine Kontrollabfrage, um den Inhalt des Zwischenspeichers in der RFID-Einrichtung auszulesen. Diese Kontrollabfrage wird in Schritt 115 vom RFID Lese-/Schreibgerät an die RFID-Einrichtung gesendet, welche es in 116 empfängt und in 117 den Inhalt der zuvor empfangenen Nachricht aus dem Zwischenspeicher holt. Dieser Datensatz wird in 118 für das RFID Lese-/Schreibgerät bereitgestellt, welche es in 119 empfängt und an die externe Applikation weitergibt, welche es in 120 mit der zuvor in 109 erstellten Nachricht vergleicht. Stimmen die beiden Datensätze nicht überein, kann in 121 der Vorgang ggf. wiederholt werden, um die Nachricht (z.B. Konfiguration) noch einmal an das Routersystem zu senden. Die Entscheidung auf Wiederholung kann über die oben erwähnte Benutzerschnittstelle durch den Anwender getroffen werden oder von einem Automatismus. Die Anzahl der Wiederholungen kann mindestens 1 betragen, die max. Anzahl der Wiederholungen kann durch einen Automatismus festgelegt sein oder durch Abbruch der Wiederholversuche durch den Anwender über die Benutzerschnittstelle beschränkt sein.

Stimmen die Nachrichten überein, ist die Nachricht der Applikation und damit die gewünschte Konfiguration, oder auch Steuer- bzw. Diagnosekommando korrekt im Routersystem angekommen. Da z.B. in der übermittelten Konfiguration schützenswerte Daten liegen, die vor weiterem Auslesen durch andere RFID Lese-/Schreibgeräte geschützt sein sollen, kann nun in 122 entschieden werden, die Funkschnittstelle der RFID-Einrichtung im Routersystem abzuschalten. Diese Entscheidung kann über die Benutzerschnittstelle durch den Anwender getroffen werden oder von einem Automatismus. Soll die Funkschnittstelle deaktiviert werden, wird in 123 von der externen Applikation die entsprechende Abschaltenachricht erstellt und über 124 an die RFID-Einrichtung gesendet, die sie in 125 empfängt und anschließend in 126 die Funkschnittstelle deaktiviert.

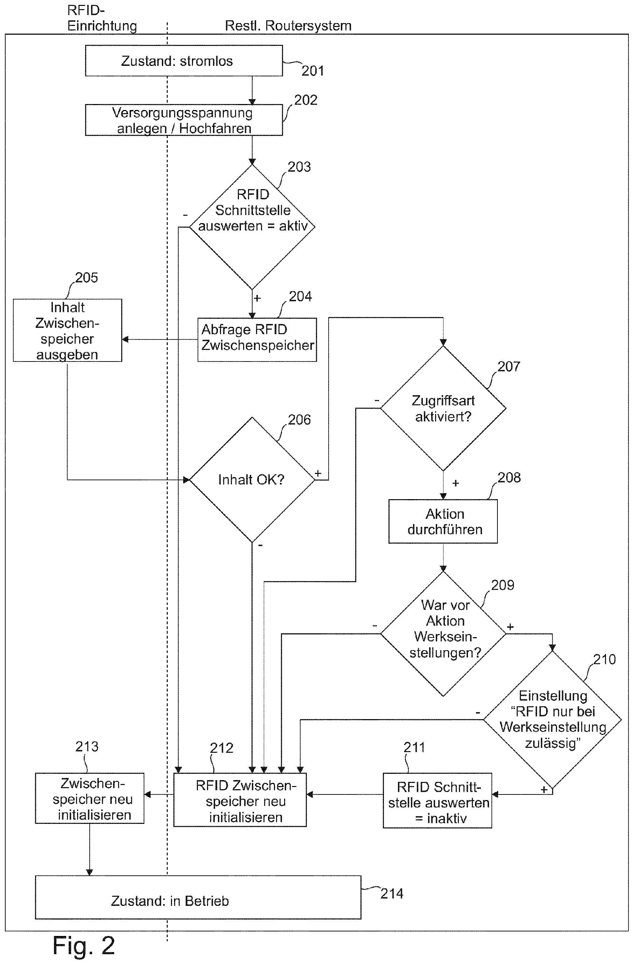

Fig. 2 zeigt einen bevorzugten Ablauf, wenn ein Routersystem über ein Verfahren wie in Fig. 1 gezeigt aus dem stromlosen Zustand startet und den Empfang von Nachrichten zur Konfiguration, Steuerung oder Diagnose über RFID prüft.

Das Routersystem startet aus dem stromlosen Zustand 201 durch Anlegen der Versorgungsspannung 202. Ist die Auswertung von Nachrichten über die RFID-Schnittstelle per Konfiguration deaktiviert, erfolgt nach der entsprechenden Überprüfung in 203 der weitere Ablauf bei 212. Da die Auswertung von per RFID-Schnittstelle empfangenen Nachrichten in einer bevorzugten Ausführung für die Zugriffsarten Konfiguration, Steuerung und Diagnose getrennt aktivierbar bzw. deaktivierbar ist, erfolgt dieser Sprung zu Position 212 nur, wenn für keine der Zugriffsarten eine Aktivierung besteht. Ansonsten wird in 204 der Inhalt des Zwischenspeichers der RFID-Einrichtung abgefragt, welcher in Schritt 205 ausgegeben wird. Die Inhaltsprüfung in 206 erstreckt sich mindestens auf die Überprüfung der Korrektheit der (z.B. oben genannten) Datenfelder, die in einer Nachricht enthalten sind, insbesondere, aber nicht ausschließlich die Überprüfung der korrekten Authentifizierung und der Integritätsprüfung sowie der Überprüfung, ob die empfangene Nachricht grundsätzlich für das Routersystem auswertbar ist, beispielsweise, ob es sich um unterstützte Kommandos handelt. Ist der Inhalt der Nachricht nicht korrekt, erfolgt die weitere Bearbeitung in Position 212.

Bei korrektem Inhalt erfolgt in 207 die Überprüfung, ob das in der Nachricht enthaltene Kommando von der externen Applikation an das Routersystem entsprechend seiner Zugriffsart in der aktuellen Konfiguration des Routersystems erlaubt, d.h. aktiviert ist. Ist dies nicht der Fall, erfolgt die weitere Bearbeitung in Position 212.

Ist die mit dem Kommando einhergehende Zugriffsart aktiviert, erfolgt in 208 die eigentliche Durchführung der Aktion. Dies kann bevorzugt mindestens eine Aktion entsprechend einer der Zugriffsarten Konfiguration, Steuerung oder Diagnose sein. Beispielsweise können mittels Konfiguration Parameter übergeben werden, die das Routersystem zukünftig nach Wechsel in den Zustand "Betrieb" verwenden soll. Beispielsweise kann auch als Steueraufgabe übergeben werden, dass das Routersystem nach Wechsel in den Zustand "Betrieb" ein Firmwareupdate über einen Server im Internet durchführen soll.

Nach Durchführung der Aktion erfolgt in Position 209 die Überprüfung, ob das Gerät vor Durchführung der Aktion noch auf Werkseinstellungen gesetzt war. War dies nicht der Fall, wird mit der weiteren Bearbeitung in Position 212 fortgefahren. War das Gerät vor Durchführung der Aktion 208 noch auf Werkseinstellungen, erfolgt in Schritt 210 die Überprüfung, ob die Einstellung aktiv ist, dass der Zugriff über die RFID-Schnittstelle nur bei Werkseinstellungen erlaubt ist. Ist dies nicht der Fall, erfolgt die weitere Bearbeitung in 212. Ist die Einstellung, dass der Zugriff über die RFID-Schnittstelle nur bei Werkseinstellungen erlaubt ist, aktiv, wird in 211 automatisch der Parameter deaktiviert, der die Auswertung von Nachrichten über die RFID Schnittstelle erlaubt. In einer bevorzugten Ausführung ist sowohl der Parameter, dass ein Zugriff über RFID nur bei Werkseinstellungen möglich ist, als auch der Parameter, der einen Zugriff über die RFID-Schnittstelle freigibt, für die Zugriffsarten Konfiguration, Steuerung und Diagnose jeweils separat einstellbar. Beispielsweise kann die Konfiguration per RFID-Schnittstelle nur bei Werkseinstellungen erlaubt sein, die Steuerung per RFID-Schnittstelle kann komplett deaktiviert sein und die Diagnose per RFID-Schnittstelle kann jederzeit erlaubt sein.

Nach Abarbeitung sämtlicher vorgenannter Schritte wird zentral in 212 die Neu-Initialisierung des RFID-Zwischenspeichers veranlasst, welche in 213 von der RFID-Einrichtung durchgeführt wird. Beispielsweise wird mindestens das Datenfeld, was die Ursache des letzten Schreibzugriffs per RFID auf das Routersystem enthält, als auch die eindeutige Gerätekennung wiederhergestellt. Dies berücksichtig entsprechend auch den Fall, dass die RFID-Einrichtung und damit der Zwischenspeicher von einem anderen RFID Lese-/Schreibgerät, welches nicht mit einer bestimmungsgemäßen externen Applikation verbunden ist, mit nicht für das Routersystem verwendbaren Daten beschrieben wurde.

Anschließend wechselt das Routersystem in den Zustand "Betrieb" 214, wo es beispielsweise mit der eben erhaltenen Konfiguration arbeitet.

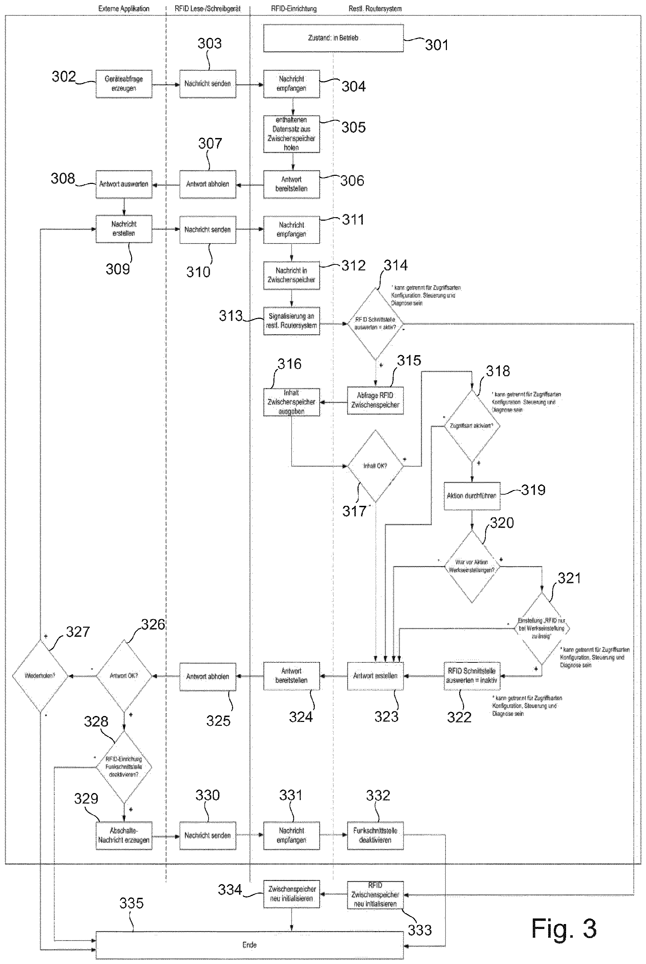

Fig. 3 zeigt einen bevorzugten Ablauf, wenn ein Routersystem im Zustand "Betrieb" 301 von einer externen Applikation über RFID Nachrichten zur Konfiguration, Steuerung oder Diagnose erhält.

Die Ablaufschritte 302 bis 312 entsprechen den Schritten 102 bis 112 aus Fig. 1. Da das Routersystem sich nun im Zustand Betrieb befindet, kann die RFID-Einrichtung in 313 den Erhalt einer Nachricht an das restliche Routersystem signalisieren.

Die Ablaufschritte 314 bis 322 entsprechen grundsätzlich den Schritten 203 bis 211 in Fig. 2. Unterschiedlich zum entsprechenden Teil in Fig. 2 ist, dass eine Neu-Initialisierung des RFID-Zwischenspeichers (hier: Schritte 333 und 334) nicht in jedem Fall durchgeführt wird, sondern nur, wenn das Ergebnis der Prüfung in Schritt 314 negativ ausfällt. In allen anderen Fällen wird in Schritt 323 eine Antwort an die externe Applikation erstellt, welche in 324 von der RFID-Schnittstelle zur Abholung bereitgestellt wird.

Die Antwort des Routersystems kann, wie auch weiter oben beschrieben, bevorzugt mindestens folgende Informationen enthalten:
∘ Kommando erfolgreich ausgeführt,
∘ Kommando nicht erfolgreich ausgeführt,
∘ Authentifizierung fehlerhaft,
∘ Integritätsprüfung fehlgeschlagen.
Darüber hinaus sind darin auch weiterführende angeforderte Informationen enthalten.

Die Antwort wird in 325 vom externen RFID Lese-/Schreibgerät abgeholt und an die externe Applikation zur Prüfung der Antwort übergeben. Ist die Antwort nicht OK, weil das Kommando vom Routersystem negativ rückgemeldet wurde (beispielsweise weil die Authentifizierung fehlgeschlagen ist oder weil ein Kommando nicht unterstützt wird), kann in 327 der Vorgang ggf. wiederholt werden, um die Nachricht (z.B. Konfiguration) noch einmal an das Routersystem zu senden. Die Entscheidung auf Wiederholung kann über die schon erwähnte Benutzerschnittstelle durch den Anwender getroffen werden oder von einem Automatismus. Die Anzahl der Wiederholungen kann mindestens 1 betragen, die max. Anzahl der Wiederholungen kann durch einen Automatismus festgelegt sein, durch den Anwender vorgegeben werden oder durch Abbruch der Wiederholversuche durch den Anwender über die Benutzerschnittstelle beschränkt sein.

Ist die Antwort OK, ist die Nachricht vom Routersystem positiv rückgemeldet und die Aktion entsprechend durchgeführt worden. In der Antwort vom Routersystem können bevorzugt noch weiterführende, evtl. auch weitere von der externen Applikation angeforderte Daten enthalten sein zur weiteren Auswertung durch die externe Applikation oder zur Anzeige/Weiterverarbeitung über die Benutzerschnittstelle zum Anwender.
Die Ablaufschritte 328 bis 332 entsprechen im Wesentlichen den Schritten 122 bis 126 in Fig. 1 und werden daher nicht erneut beschrieben.

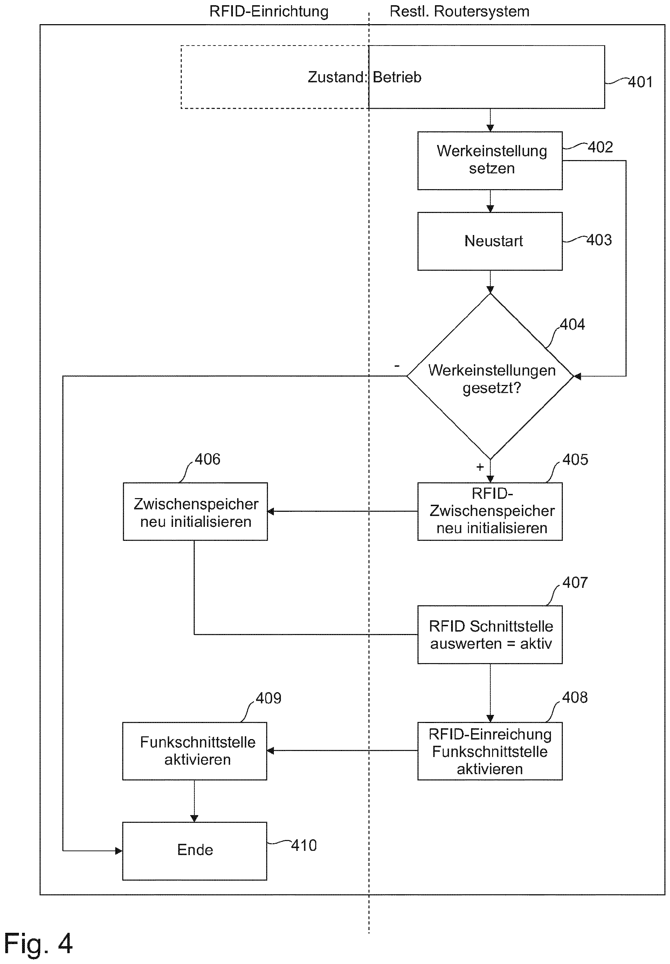

Fig. 4 zeigt einen bevorzugten Ablauf, bei dem die Auswertemöglichkeiten über die RFID-Schnittstelle nach Setzen auf Werkseinstellungen wiederhergestellt werden. Ausgangszustand dieses Ablaufs ist mindestens, dass sich das restliche Routersystem im Zustand "Betrieb" 401 befindet. Die RFID-Einrichtung könnte sich beispielsweise auch nicht im Zustand "Betrieb" befinden, weil sie z.B. in einem vorherigen Schritt deaktiviert worden ist.

In Schritt 402 werden Werkseinstellungen gesetzt. Dies kann vom Benutzer des Routers initiiert werden über eine der standardmäßig verfügbaren Konfigurationsschnittstellen, kann aber auch vom Routersystem automatisiert angestoßen werden. Gegebenenfalls ist ein Neustart 403 zum ordnungsgemäßen Setzen der Werkseinstellungen notwendig. Entsprechend ist dann nach einem Neustart eine Überprüfung 404 nötig, ob dieser Neustart mit Werkseinstellungen erfolgt.

Nach dem Setzen von Werkseinstellungen erfolgt in 405 die Veranlassung der Neu-Initialisierung des RFID-Zwischenspeichers, welche in 406 durchgeführt wird. Ebenso werden in 407 durch evtl. vorhergehende Konfigurationsschritte (z.B. Schritte vor dem Setzen der Werkseinstellungen) deaktivierte Auswertefreigaben für die RFID-Schnittstelle wieder aktiviert. Bevorzugt erfolgt dies für verschiedene Arten des Zugriffs separat, mindestens für die Zugriffsarten Konfiguration, Steuerung und Diagnose. Zusätzlich wird in 408 und 409 eine durch evtl. vorhergehende Konfigurationsschritte (z.B. Schritte vor dem Setzen der Werkseinstellungen) deaktivierte RFID-Schnittstelle wieder aktiviert.

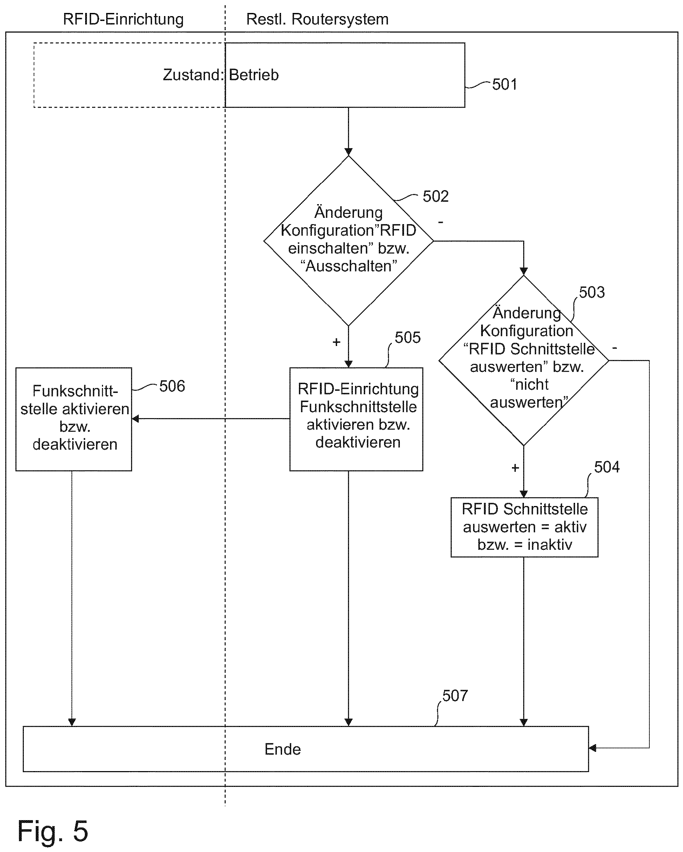

Fig. 5 zeigt einen bevorzugten Ablauf, bei dem durch Konfigurationsänderungen sowohl die komplette RFID-Schnittstelle aktiviert/deaktiviert werden kann, als auch nur die Auswertung von Nachrichten über die RFID-Schnittstelle aktiviert/deaktiviert werden kann. Ausgangszustand dieses Ablaufs ist mindestens, dass das restliche Routersystem im Zustand "Betrieb" 501 ist. Die RFID-Einrichtung kann beispielsweise auch nicht im Zustand "Betrieb" sein, weil sie z.B. in einem vorherigen Schritt deaktiviert worden ist.

Durch eine Umkonfiguration des Routersystems kann der Parameter geändert werden, der die RFID-Funktionalität generell ein- bzw. ausschaltet. Wird dies in 502 erkannt, erfolgt in 505 die Veranlassung der entsprechenden Aktivierung bzw. Deaktivierung der RFID-Schnittstelle, welche in 506 von der RFID-Einrichtung durchgeführt wird. Weiterhin kann durch eine Umkonfiguration des Routersystems die Auswertung von Nachrichten über die RFID-Schnittstelle aktiviert bzw. deaktiviert werden. Bevorzugt kann dies für verschiedene Zugriffsarten getrennt erfolgen, beispielsweise für Konfiguration, Steuerung und Diagnose. Wird dies in 503 erkannt, so wird der entsprechende Parameter entsprechend aktiviert bzw. deaktiviert.

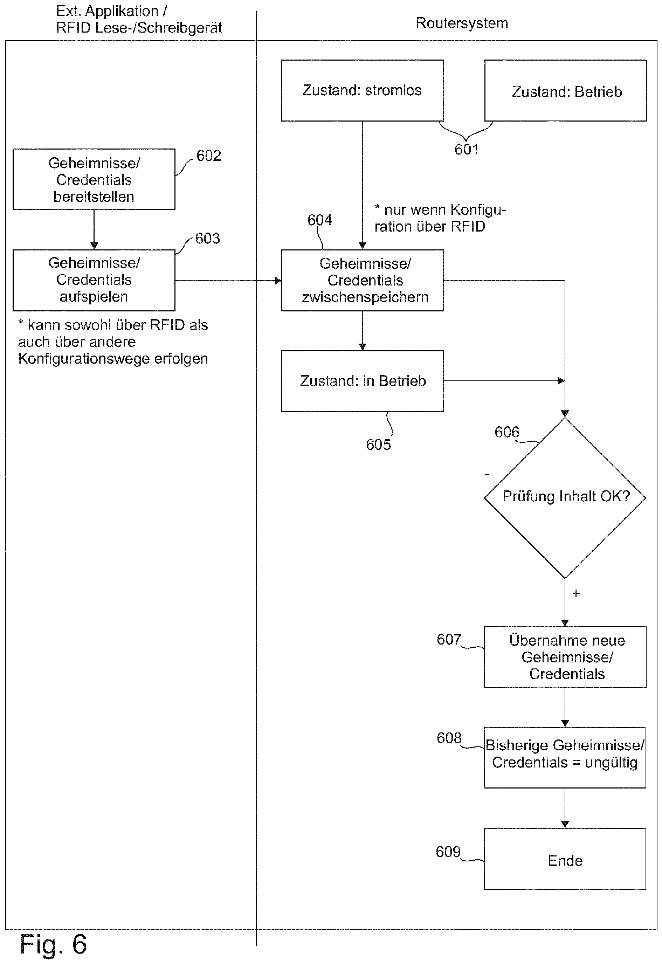

Fig. 6 zeigt einen bevorzugten Ablauf, bei der die für RFID benutzten Authentifizierungs- und Verschlüsselungsmethoden geändert werden. Diese Abbildung zeigt nicht mehr alle in den vorgenannten Abbildungen gezeigten Ablaufdetails. Bei Zugriff über die RFID-Schnittstelle gelten diese jedoch sinngemäß in den entsprechenden Detailschritten. Beispielsweise kann - für den einfachen Zugriff bei fabrikneuen Geräten - bei Werkseinstellungen ein einfaches Authentifizierungsverfahren mit Standard-Benutzername/Passwort für die RFID-Schnittstelle konfiguriert und festgelegt sein.

Um den dadurch festgelegten Zugriffsschutz zu erhöhen, werden in 602 von einer externen Applikation zusätzliche Daten für den erweiterten Zugriffsschutz bereitgestellt. Dies kann über Standard-Konfigurationsschnittstellen erfolgen, auch über die RFID-Schnittstelle, insbesondere auch über eine Internetverbindung durch einen Server. Die Daten für den erweiterten Zugriffsschutz können Kombinationen aus Benutzername/Passwort, Zertifikate oder Schlüssel sein.

In 603 werden diese Daten auf das Routersystem aufgespielt, welche es in 604 zwischenspeichert. Zum Aufspielen der neuen Daten nutzt die externe Applikation noch die zu diesem Zeitpunkt gültigen Authentifizierungsdaten. Ist das Routersystem in diesem Moment noch im Zustand 601 stromlos, so ist dies bevorzugt über die RFID-Schnittstelle möglich. Um die Daten auf dem Routersystem zu schützen, bis die Daten vom Routersystem abgeholt werden, ist gegebenenfalls, wie schon in Fig. 1 beschrieben, die nachfolgende Deaktivierung der RFID-Schnittstelle durchzuführen. Nach Wechsel in den Zustand "Betrieb" 605 erfolgt vom Routersystem die Prüfung, ob die übergebenen Daten vollständig und korrekt sind, um sie in 607 zu übernehmen. Ab diesem Zeitpunkt sind die vorher gültigen Authentifizierungsdaten nicht mehr aktiv 608.

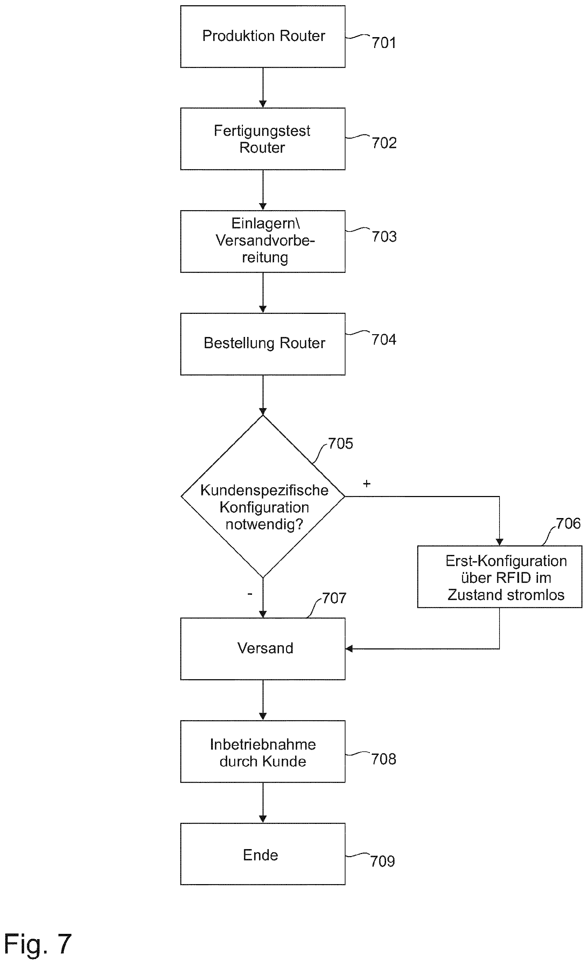

Fig. 7 zeigt beispielhaft die vorteilhafte Anwendung der Konfiguration per RFID-Schnittstelle zur individuellen Erstkonfiguration ab Werk durch den Hersteller. Ausgangspunkt ist die standardisierte Produktion des Routers in 701 und der anschließende Fertigungstest in 702. Darauf folgt die Einlagerung bzw. Versandvorbereitung des verkaufsfertigen Routers. Bis zu diesem Schritt sind keine kundenindividuellen Parameter zu berücksichtigen und der Produktionsprozess kann standardmäßig erfolgen.

Mit der Bestellung des Routers 704 durch den Kunden entscheidet sich in 705, ob ein Kunde eine spezifische Konfiguration eines einzelnen Routers oder eines Lieferloses benötigt. Notwendige Informationen zur Konfiguration werden vom Kunden an den Hersteller übergeben. Ist keine kundenspezifische Konfiguration notwendig, kann das Produkt in 707 direkt versendet werden.

Ist eine kundenspezifische Konfiguration notwendig oder erwünscht, wird diese in 706 durchgeführt. Dies kann entsprechend Fig. 3 erfolgen, bevorzugt auch nach Fig. 1. Besonders vorteilhaft beim Ablauf in Fig. 1 ist, dass hierfür das Gerät im stromlosen Zustand bleiben kann, besonders bevorzugt sogar noch in der Verpackung, so dass es nach der Konfiguration umgehend in den Versand 707 gehen kann. Der Kunde kann in 708 den Router umgehend mit der ab Werk eingespielten kundenspezifischen Konfiguration in Betrieb nehmen. Darüber hinaus kann die kundenspezifische Konfiguration ab Werk den Router veranlassen, nach erfolgter erster Inbetriebnahme sich selbständig weitere Konfigurationen zu holen, beispielsweise über das Internet von einem Server (nicht dargestellt).

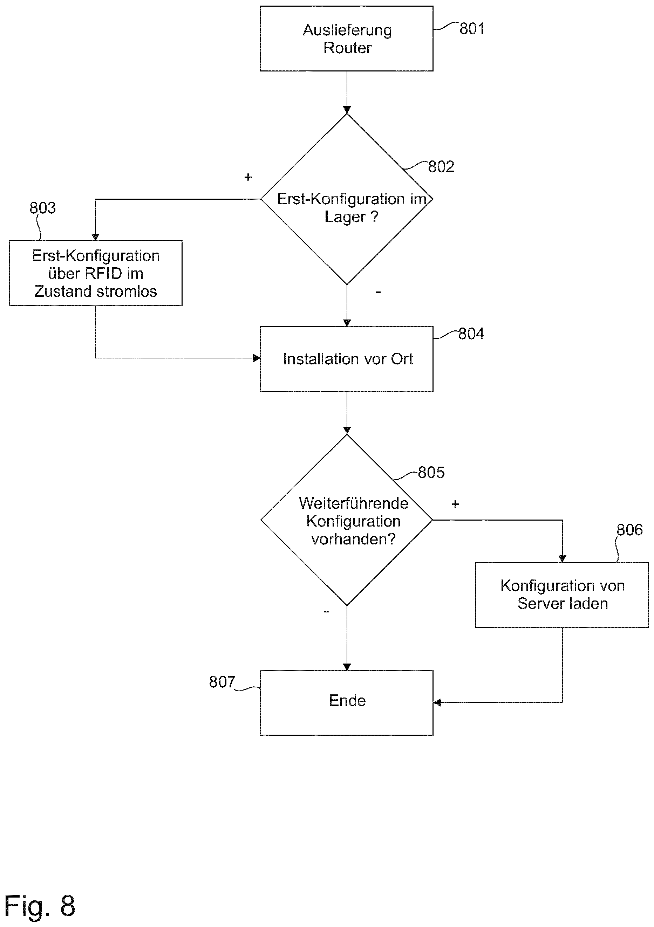

Fig. 8 zeigt beispielhaft die vorteilhafte Anwendung der Konfiguration per RFID-Schnittstelle zur einfachen Erstkonfiguration durch den Kunden/Anwender. Ausgangspunkt ist die Auslieferung eines Routers an den Kunden. Eine individuelle Erstkonfiguration ab Werk durch den Hersteller hat bevorzugt noch nicht stattgefunden. Durch die Möglichkeit der stromlosen Konfiguration kann der Kunde in 802 noch entscheiden, die Erst-Konfiguration 803 im stromlosen Zustand entsprechend Fig. 1 durchzuführen. Besonders vorteilhaft hierbei ist, dass das Gerät im stromlosen Zustand bleiben kann, besonders bevorzugt sogar noch in der Verpackung, so dass es nach der Konfiguration umgehend zur Installation vor Ort 804 gehen kann. Alternativ kann der Router auch schon vom Hersteller eine kundenspezifische Konfiguration erhalten haben (siehe Fig. 7), so dass der Router direkt zur Installation vor Ort 804 gehen kann. Die erhaltene Erst-Konfiguration kann in 805 den Router veranlassen, sich selbständig weitere Konfigurationen zu laden, beispielsweise über das Internet von einem Server (nicht dargestellt).

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Router mit einer Vielzahl von ersten Schnittstellen zur Übertragung von Datenpaketen zwischen dem Router und Netzwerken oder Netzwerkteilnehmern über Kabel und/oder kabellos, wobei der Router mindestens eine zweite Schnittstelle zum Empfangen und/oder Senden von Daten von/an eine/r Gegenstelle über Kabel und/oder kabellos aufweist, wobei diese zweite Schnittstelle physisch von allen ersten Schnittstellen derart getrennt ist, dass keine direkte Datenübertragung zwischen der mindestens einen zweiten Schnittstelle und den ersten Schnittstellen möglich ist
**dadurch gekennzeichnet, dass**.
die mindestens eine zweite Schnittstelle mit einem nichtflüchtigen Speicher in Kommunikationsverbindung steht, so dass über die zweite Schnittstelle Daten in den nichtflüchtigen Speicher geschrieben und ausgelesen werden können, wobei Daten bezüglich der Funktion des Routers von der Gegenstelle aus dem nichtflüchtigen Speicher ausgelesen werden können, wobei die Daten bezüglich der Funktion des Routers von einer Steuereinrichtung über eine dritte Schnittstelle in den nichtflüchtigen Speicher geschrieben werden können, wobei mindestens eine zweite Schnittstelle eine passive RFID-Schnittstelle ist, wodurch diese mindestens eine zweite Schnittstelle derart ausgebildet ist, dass eine Kommunikation über diese Schnittstelle auch dann möglich ist, wenn der Router sich in einem stromlosen Zustand befindet.

2. Router nach Anspruch 1,
**dadurch gekennzeichnet, dass**
der mit der zweiten Schnittstelle in Kommunikationsverbindung stehende nichtflüchtige Speicher derart mit einer Steuereinrichtung des Routers verbunden ist, dass durch die Steuereinrichtung Daten, die ausgewählt sind aus Konfigurationsdaten, Steuerdaten, Diagnosedaten und oder Kombinationen davon, aus dem nichtflüchtigen Speicher auslesbar oder auf diesem ablegbar sind.

3. Router nach einem der Ansprüche -1 oder 2,
**dadurch gekennzeichnet, dass**
die passive RFID-Schnittstelle eine bevorzugt im Routerinneren angeordnete RFID-Antenne aufweist.

4. Router nach einem der vorangegangenen Ansprüche,
**dadurch gekennzeichnet, dass**
der Router eine Zugriffssteuereinrichtung aufweist, mittels der ein Zugriff auf den nichtflüchtigen Speicher über die RFID-Schnittstelle und/oder durch die Steuereinrichtung des Routers unabhängig voneinander aktivierbar oder deaktivierbar ist.

5. Router nach einem der vorangegangenen Ansprüche,
**dadurch gekennzeichnet, dass**
der Router eine Kontrolleinrichtung aufweist, mittels der eine Berechtigung zur Kommunikation über die eine zweite Schnittstelle und/oder Lese- und/oder Schreibrechte auf einem nichtflüchtigen Speicher überprüfbar ist/sind.

6. Router nach einem der vorangegangenen Ansprüche,
**dadurch gekennzeichnet, dass**
der Router eine Kommunikations- und Auswerteeinrichtung aufweist, welche die von der zweiten Schnittstelle empfangenen Daten auswertet, wobei die Kommunikations- und Auswerteeinrichtung eine Signalisierungsfunktion umfasst, mittels der der Steuereinrichtung mitgeteilt werden kann, dass von der Gegenstelle Daten in dem nichtflüchtigen Speicher abgelegt wurden.

7. Verfahren zur Konfiguration eines Routers mit einer Vielzahl von ersten Schnittstellen zur Übertragung von Datenpaketen zwischen dem Router und Netzwerken oder Netzwerkteilnehmern über Kabel und/oder kabellos,
**dadurch gekennzeichnet, dass**
Konfigurationsdaten von einer Gegenstelle gesendet und über mindestens eine zweite Schnittstelle übertragen und anschließend auf einem nichtflüchtigen Speicher des Routers abgelegt werden, wobei die zweite Schnittstelle eine kabelgebundene und/oder kabellose Schnittstelle ist und diese zweite Schnittstelle physisch von allen ersten Schnittstellen derart getrennt ist, dass keine direkte Datenübertragung zwischen der mindestens einen zweiten Schnittstelle und den ersten Schnittstellen möglich ist wobei die mindestens eine zweite Schnittstelle mit einem nichtflüchtigen Speicher in Kommunikationsverbindung steht, so dass über die zweite Schnittstelle Daten in den nichtflüchtigen Speicher geschrieben werden können, wobei die von der zweiten Schnittstelle empfangenen Daten von einer Kommunikations- und Auswerteeinrichtung ausgewertet werden, wobei die Konfigurationsdaten von einer Steuereinrichtung über eine dritte Schnittstelle aus dem nichtflüchtigen Speicher ausgelesen werden, wobei mindestens eine zweite Schnittstelle eine passive RFID-Schnittstelle ist, wobei sich der Router während der Übertragung von Daten über mindestens eine zweite Schnittstelle in einem stromlosen Zustand befindet.

8. Verfahren nach Anspruch 7,
**dadurch gekennzeichnet, dass**
die Konfigurationsdaten kontaktlos, bevorzugt per radio frequency identification, RFID übertragen werden.

9. Verfahren nach Anspruch 7 bis 8,
**dadurch gekennzeichnet, dass**
die Kommunikations- und Auswerteeinrichtung eine Signalisierungsfunktion umfasst, mittels der der Steuereinrichtung mitgeteilt werden kann, dass von der Gegenstelle Daten in dem nichtflüchtigen Speicher abgelegt wurden.

10. Verfahren zur Diagnose eines Routers mit einer Vielzahl von ersten Schnittstellen zur Übertragung von Datenpaketen zwischen dem Router und Netzwerken oder Netzwerkteilnehmern über Kabel und/oder kabellos,
**dadurch gekennzeichnet, dass**
Diagnosedaten von einer Gegenstelle über mindestens eine zweite Schnittstelle von einem nichtflüchtigen Speicher des Routers gelesen werden, wobei die zweite Schnittstelle eine kabelgebundene und/oder kabellose Schnittstelle ist und diese zweite Schnittstelle physisch von allen ersten Schnittstellen derart getrennt ist, dass keine direkte Datenübertragung zwischen der mindestens einen zweiten Schnittstelle und den ersten Schnittstellen möglich ist, wobei Daten bezüglich der Funktion des Routers von der Gegenstelle aus dem nichtflüchtigen Speicher ausgelesen werden können, wobei die Daten bezüglich der Funktion des Routers von einer Steuereinrichtung über eine dritte Schnittstelle in den nichtflüchtigen Speicher geschrieben werden können wobei mindestens eine zweite Schnittstelle eine passive RFID-Schnittstelle ist, wobei sich der Router während der Übertragung von Daten über mindestens eine zweite Schnittstelle in einem stromlosen Zustand befindet.

## Claims

1. Router comprising a plurality of first interfaces for transmitting data packets between the router and networks or network participants by wire and/or wirelessly, the router having at least one second interface for receiving and/or sending data from/to a remote terminal by wire and/or wirelessly, said second interface being physically separated from all of the first interfaces such that it is not possible to directly transmit data between the at least one second interface and the first interfaces,
**characterised in that**
the at least one second interface is communicatively connected to a non-volatile memory such that data can be written into the non-volatile memory and read out via the second interface, it being possible for data relating to the function of the router to be read from the non-volatile memory by the remote terminal, it being possible for data relating to the function of the router to be written by an operating device into the non-volatile memory via a third interface, at least one second interface being a passive RFID interface, as a result of which said at least one second interface is designed such that communication via said interface is possible even if the router is in a de-energised state.

2. Router according to claim 1,
**characterised in that**
the non-volatile memory that is communicatively connected to the second interface is connected to a operating device of the router such that, by means of the operating device, data selected from configuration data, control data, diagnostic data and/or combinations thereof can be read from the non-volatile memory or stored thereon.

3. Router according to either claim 1 or claim 2,
**characterised in that**
the passive RFID interface has an RFID antenna which is preferably arranged in the interior of the router.

4. Router according to any of the preceding claims,
**characterised in that**
the router has an access control device, by means of which access to the non-volatile memory via the RFID interface and/or by the operating device of the router can be activated or deactivated independently of one another.

5. Router according to any of the preceding claims,
**characterised in that**
the router has a control device, by means of which an authorisation for communication via the one second interface and/or read permissions and/or write permissions to a non-volatile memory can be checked.

6. Router according to any of the preceding claims,
**characterised in that**
the router has a communication and evaluation device which evaluates the data received from the second interface, the communication and evaluation device comprising a signaling function by means of which the operating device can be informed that data has been stored, by the remote terminal, in the non-volatile memory.

7. Method for configuring a router with a plurality of first interfaces for transmitting data packets between the router and networks or network participants by wire and/or wirelessly,
**characterised in that**
configuration data are sent from a remote terminal and transmitted via at least one second interface and then stored on a non-volatile memory of the router, the second interface being a wired and/or wireless interface and said second interface being physically separated from all of the first interfaces such that it is not possible to directly transmit data between the at least one second interface and the first interfaces, the at least one second interface being communicatively connected to a non-volatile memory such that data can be written into the non-volatile memory via the second interface, the data received from the second interface being evaluated by a communication and evaluation device, the configuration data being read from the non-volatile memory by an operating device via a third interface, at least one second interface being a passive RFID interface, the router being in a de-energised state during the transmission of data via at least one second interface.

8. Method according to claim 7,
**characterised in that**
the configuration data are transmitted contactlessly, preferably by means of radio frequency identification, RFID.

9. Method according to either claim 7 or claim 8,
**characterised in that**
the communication and evaluation device comprises a signaling function, by means of which the operating device can be informed that data has been stored, by the remote terminal, in the non-volatile memory.

10. Method for diagnosing a router with a plurality of first interfaces for transmitting data packets between the router and networks or network participants by wire and/or wirelessly,
**characterised in that**
diagnostic data can be read from a non-volatile memory of the router by a remote terminal via at least one second interface, the second interface being a wired and/or wireless interface and said second interface being physically separated from all of the first interfaces such that it is not possible to directly transmit data between the at least one second interface and the first interfaces, it being possible for data relating to the function of the router to be read from the non-volatile memory by the remote terminal, it being possible for the data relating to the function of the router to be written into the non-volatile memory by an operating device via a third interface, at least one second interface being a passive RFID interface, the router being in a de-energised state during the transmission of data via at least one second interface.

## Revendications

1. Routeur comportant une pluralité de premières interfaces pour le transfert de paquets de données entre le routeur et des réseaux ou des abonnés au réseau de manière filaire et/ou sans fil, dans lequel le routeur présente au moins une deuxième interface pour la réception et/ou l'envoi de données à partir de/à un terminal à distance de manière filaire et/ou sans fil, dans lequel cette deuxième interface est séparée physiquement de toutes les premières interfaces de telle sorte qu'aucun transfert de données direct ne soit possible entre ladite au moins une deuxième interface et les premières interfaces
**caractérisé par le fait que**
ladite au moins une deuxième interface est en liaison de communication avec une mémoire non volatile, de telle sorte que des données peuvent être écrites et lues dans la mémoire non volatile par l'intermédiaire de la deuxième interface, dans lequel des données concernant la fonction du routeur peuvent être lues à partir de la mémoire non volatile par le terminal à distance, dans lequel les données concernant la fonction du routeur peuvent être écrites dans la mémoire non volatile par l'intermédiaire d'une troisième interface par un dispositif de commande, dans lequel au moins une deuxième interface est une interface RFID passive, ce par quoi cette au moins une deuxième interface est conçue de telle sorte qu'une communication est aussi possible par l'intermédiaire de cette interface, lorsque le routeur se trouve dans un état sans alimentation.

2. Routeur selon la revendication 1,
**caractérisé par le fait que**
la mémoire non volatile se trouvant en liaison de communication avec la deuxième interface est reliée au dispositif de commande du routeur de telle sorte que, par le dispositif de commande, des données, qui sont choisies parmi des données de configuration, des données de commande, des données de diagnostic et/ou des combinaisons de celles-ci, peuvent être lues à partir de la mémoire non volatile ou peuvent être stockées sur celle-ci.

3. Routeur selon l'une des revendications 1 ou 2,
**caractérisé par le fait que**
l'interface RFID passive présente une antenne RFID disposée de préférence dans l'intérieur du routeur.

4. Routeur selon l'une des revendications précédentes,
**caractérisé par le fait que**
le routeur présente un dispositif de commande d'accès, au moyen duquel un accès à la mémoire non volatile peut être activé ou désactivé par l'intermédiaire de l'interface RFID et/ou au moyen du dispositif de commande du routeur indépendamment l'un de l'autre.

5. Routeur selon l'une des revendications précédentes,
**caractérisé par le fait que**
le routeur présente un dispositif de contrôle, au moyen duquel une autorisation pour la communication par l'intermédiaire de la deuxième interface et/ou des droits de lecture et/ou d'écriture sur une mémoire non volatile est/sont vérifiable/vérifiables.

6. Routeur selon l'une des revendications précédentes,
**caractérisé par le fait que**
le routeur présente un dispositif de communication et d'évaluation, lequel évalue les données reçues par la deuxième interface, dans lequel le dispositif de communication et d'évaluation comporte une fonction de signalisation, au moyen de laquelle le dispositif de commande peut être informé que des données ont été stockées dans la mémoire non volatile en provenance du terminal à distance.

7. Procédé de configuration d'un routeur comportant une pluralité de premières interfaces pour le transfert de paquets de données entre le routeur et des réseaux ou des abonnés au réseau de manière filaire et/ou sans fil,
**caractérisé par le fait que**
des données de configuration sont envoyées par un terminal à distance et transférées au moyen d'au moins une deuxième interface et ensuite stockées sur une mémoire non volatile du routeur, dans lequel la deuxième interface est une interface filaire et/ou sans fil et cette deuxième interface est séparée physiquement de toutes les premières interfaces de telle sorte qu'aucun transfert de données direct ne soit possible entre ladite au moins une deuxième interface et les premières interfaces, dans lequel ladite au moins une deuxième interface est en liaison de communication avec une mémoire non volatile, de telle sorte que des données peuvent être écrites dans la mémoire non volatile par l'intermédiaire de la deuxième interface, dans lequel les données reçues par la deuxième interface sont évaluées par un dispositif de communication et d'évaluation, dans lequel les données de configuration sont lues à partir de la mémoire non volatile par l'intermédiaire d'une troisième interface par un dispositif de commande, dans lequel au moins une deuxième interface est une interface RFID passive, dans lequel le routeur se trouve dans un état sans alimentation durant le transfert de données par l'intermédiaire d'au moins une deuxième interface.

8. Procédé selon la revendication 7,
**caractérisé par le fait que**
les données de configuration sont transférées sans contact, de préférence par identification radiofréquence, RFID.

9. Procédé selon l'une des revendications 7 et 8,
**caractérisé par le fait que**
le dispositif de communication et d'évaluation comporte une fonction de signalisation, au moyen de laquelle le dispositif de commande peut être informé que des données ont été stockées dans la mémoire non volatile en provenance du terminal à distance.

10. Procédé de diagnostic d'un routeur comportant une pluralité de premières interfaces pour le transfert de paquets de données entre le routeur et des réseaux ou des abonnés au réseau de manière filaire et/ou sans fil,
**caractérisé par le fait que**
des données de diagnostic sont lues à partir d'une mémoire non volatile du routeur par l'intermédiaire d'au moins une deuxième interface par un terminal à distance, dans lequel la deuxième interface est une interface filaire et/ou sans fil et cette deuxième interface est séparée physiquement de toutes les premières interfaces de telle sorte qu'aucun transfert de données direct ne soit possible entre ladite au moins une deuxième interface et les premières interfaces, dans lequel des données concernant la fonction du routeur peuvent être lues à partir de la mémoire non volatile par le terminal à distance, dans lequel les données concernant la fonction du routeur peuvent être écrites dans la mémoire non volatile par l'intermédiaire d'une troisième interface par un dispositif de commande, dans lequel au moins une deuxième interface est une interface RFID passive, dans lequel le routeur se trouve dans un état sans alimentation durant le transfert de données par l'intermédiaire de ladite au moins une deuxième interface.
